# EUROPÄISCHE PATENTSCHRIFT

(11) **EP 0 469 315 B1**
(45) Veröffentlichungstag und Bekanntmachung des Hinweises auf die Patenterteilung: **08.05.1996**
(21) Anmeldenummer: 91110970.0
(22) Anmeldetag: 02.07.1991
(51) Int. Cl.: G06F 15/80, G06K 9/66

(54) **Verfahren zur visuellen Inspektion zwei- oder dreidimensionaler Bilder**
Method for visual inspection of two- or three-dimensional images
Procédé d'inspection d'images bidimensionnelles ou tridimensionnelles

(30) Priorität: 31.07.1990 DE 4024333
(43) Veröffentlichungstag der Anmeldung: 05.02.1992
(73) Patentinhaber: SIEMENS AKTIENGESELLSCHAFT, D-80333 München (DE)
(72) Erfinder: Mengel, Peter, Dr., W-8031 Eichenau (DE); Listl, Ludwig, Dipl.-Ing., W-8000 München 83 (DE)

(56) Entgegenhaltungen:
- IEEE ACOUSTICS, SPEECH, AND SIGNAL PROCESSING MAGAZINE Bd. 36, Nr. 7, Juli 1988, NEW YORK US Seiten 1109 - 1117 B. WIDROW 'layered neural nets for pattern recognition'
- THE 2ND SYMP. ON THE FRONTIERS OF MASSIVELY PARALLEL COMPUTATION 10. Oktober 1988, FAIRFAX, VIRGINIA Seiten 663 - 669 W. I. LUNDGREN 'signal processing with nodal networks on a simd massively parallel processor'

## Beschreibung

Die Erfindung betrifft ein Verfahren zur visuellen Inspektion von zwei- oder dreidimensionalen Bildern, das aus einem von einer optoelektronischen Bildaufnahme gelieferten Bild mittels einer Bildverarbeitung Bildmerkmale extrahiert und anhand dieser Bildmerkmale mittels einer Klassierung eine Einteilung verschiedener Bilder in bestimmte Klassen vornimmt.

Die zunehmende Fertigungsautomatisierung in der Industrie erfordert in verstärktem Maße die automatische Inspektion von Teilen, beispielsweise Baugruppen für elektronische Geräte. Hierzu werden leistungsfähige und flexible Bildverarbeitungssysteme benötigt. Voraussetzung für die Inspektion ist die Erkennung, Segmentierung und anschließende Interpretation und Auswertung einer Szene. Da die Informationsverarbeitung beim menschlichen Sehen weitgehend unbewußt abläuft, wird die Komplexität der Anforderungen, die zur Analyse selbst einer einfachen Szene notwendig ist, häufig unterschätzt. Technische Bildverarbeitungssysteme sind daher trotz der Fortschritte auf dem Gebiet der Mikroelektronik für einen universellen Fertigungseinsatz noch nicht oder nur bedingt geeignet.

Modernste Technologie schafft es heute beispielsweise bestimmte Muster über ein digitalisiertes Videobild einzulesen, zu erkennen und darauf zu reagieren. Dieser Vorgang, der mit sehr hohen Rechenleistungen verbunden ist, führte zu relativ guten Ergebnissen. Eine befriedigende Lösung konnte jedoch mit dem Einsatz herkömmlicher Rechner (von-Neumann-Rechner) nicht erreicht werden. Eine Mustererkennung auf dieser Basis kann lediglich identische Bilder, eventuell mit kleinen Verzerrungen oder mit überlagertem Rauschen, erkennen. Teilüberdeckungen können hier beispielsweise durch spezielle Algorithmen vor dem Vergleich zwischen einem aufgenommenen Bild und einem gespeicherten Bild herausgefiltert und durch Information ersetzt werden. Die Erkennung von unvollständigen oder verzerrten Mustern ist somit mit herkömmlicher Programmierung und herkömmlichen Rechnern nur bedingt durchführbar.

Eine Abhilfe ist durch den Einsatz von neuronalen Netzen (Neuro-Computing) geschaffen worden. Neuronale Netze sind in Anlehnung an die Funktion eines menschlichen Gehirnes aufgebaut worden und können Muster anhand von Teilinformationen in Verbindung mit bisher gesammelten Erfahrungen, beispielsweise im dreidimensionalen Sehen, erkennen. Die Stärke der herkömmlichen Rechner liegt nach wie vor bei der schnellen und genauen mathematischen Berechnung exakt vorgegebener Rechenvorschriften. Der wesentliche Vorteil neuronaler Netze liegt in der Art und Weise, wie die Information gespeichert wird. Dies geschieht bei neuronalen Netzen nicht nur nach den bekannten Mustern linearer Adressräume herkömmlicher digitaler Speicher. Ein neuronales Netz besteht aus einer Vielzahl von Neuronen, die jeweils mehrere Eingänge und einen Ausgang aufweisen. Die Neuronen sind über unterschiedlich starke Verbindungen, die Synapsen, miteinander verbunden. In einem Neuron wird die gewichtete Summe aller Eingaben gebildet. Aus dieser gewichteten Summe wird über einen Bewerter, der Bestandteil des Neurons ist, ein Ausgangssignal erzeugt. Die Wichtung der einzelnen Eingaben innerhalb eines Netzes erfolgt nun über die Synapsen, die ihrerseits gewichtet werden. Dazu sind die Synapsen in ihrer Stärke veränderbar. In dem Bewerter wird die Summe entsprechend einer vorgegebenen Funktion bewertet oder ebenfalls gewichtet. Damit ist ein neuronales Netz ein paralleles, dynamisches System, welches Informationen je nach Status, abhängig von kontinuierlichen Eingaben oder Initialwerten, ausgibt.

Wichtig bei der Behandlung von neuronalen Netzen sind vier Merkmale:
- die Funktion, anhand der der Bewerter die Summe aller Eingaben bewertet,
- die Netztopologie oder das Verbindungsschema zwischen den einzelnen Neuronen,
- das Lernmodell und
- der Typ und der Wertebereich eines neuronalen Netzes.

Die im neuronalen Netz anhand der Stärke der Synapsen gespeicherten Informationen werden während der Lernphase anhand von vorgegebenen Aufgaben mit bekannter Lösung eingebracht. Dies ist ein gängiges und nach einer Art Tutor-Schüler-Verhältnis funktionierendes Lernmodell.

Da bei visueller Prüfung Erkennungsvorgänge ablaufen, die nicht von vorne herein in präzise mathematische Regeln zu formulieren sind, sondern sehr stark mit der Aufgabenstellung variieren können, ist der Einsatz von neuronalen Netzen sinnvoll. Die Notwendigkeit für jeden Anwendungsfall zur Trennung zwischen Objekt und Hintergrund (Segmentierung), sowie zur Durchführung der Bildanalyse bei der herkömmlichen Bilderkennung, angepaßte Methoden zu entwickeln, die die bekannten Beleuchtungs- und Kontrastprobleme der Graubildverarbeitung berücksichtigen, ist enorm aufwendig. Da ein neuronales Netz assoziativ lernt und sich anhand der angebotenen Lernmuster in Verbindung mit dem erwarteten Ergebnis durch Rückkopplung anpaßt, können derartige Methoden teilweise oder vollständig entfallen.

Neuronale Netze sind in verschiedenen Ausführugen, in Hardware oder in Software, auf dem Markt erhältlich. Der bloße Einsatz von derzeit angebotenen neuronalen Netzen in der Bildverarbeitung und -erkennung reicht jedoch für übliche Fertigungsprozesse nicht aus. Die Komplexität bei den Erkennungsvorgängen bringt sie an die Grenze ihrer Leistungsfähigkeit.

IEEE Transactions on Acoustics, Speech and Signal Processing, Bd. 36, Nr. 7, Juli 1988, New York, Seiten 1109-1117, beschreibt mehrschichtige neuronale Netze zur Mustererkennung, von denen mehrere neuronale Netze Ausgangssignale erzeugen, die unabhängig sind von Änderungen der Eingangsmuster bezüglich Translation, Rotation und Skalierung.

Der Erfindung liegt die Aufgabe zugrunde, ein Verfahren zur visuellen Inspektion zwei- oder dreidimensionaler Bilder bereitzustellen, mit dem optoelektronisch aufgenommene Bilder flexibel und auf wechselnde Aufgaben selbständig angepaßt verarbeitbar sind.

Die Lösung dieser Aufgabe wird durch den kennzeichnenden Teil des Anspruches 1 wiedergegeben.

Der Erfindung liegt die Erkenntnis zugrunde, daß durch die Einführung und Festlegung von Invarianzen bezüglich der Rotation, der Translation und der Skalierung der rationelle Einsatz von neuronalen Netzen in der Bildverarbeitung ermöglicht wird, in dem die hierdurch erzielte Reduzierung der Datenmenge bzw. der Kombinationen direkt Verarbeitungszeiten bewirkt, die in üblichen Fertigungsverfahren vertretbar sind. Die Invarianzen gehen dabei direkt in die Topologie des neuronalen Netzes ein, wobei bestimmte Bereiche oder Synapsen des Netzes direkt selektiert werden und damit starr sind oder entsprechend der vorgegebenen Invarianz gleichmäßig geändert werden. Dies kann sowohl für die Stufe der Extraktion der Bildmerkmale, als auch für die Stufe der Klassierung der Bilder anhand der Bildmerkmale geschehen.

Zur Steigerung der Flexibilität eines Bilderkennungssystemes ist es sinnvoll, die Stufe der Extraktion der Bildmerkmale und die Stufe der Klassierung der Bilder jeweils durch ein neuronales Netz zu verwirklichen. Dies führt zu einer Optimierung der Entscheidungsebenen.

Eine weitere Reduzierung der erforderlichen Daten kann durch den Einsatz einer Wissensbasis geschehen. Von ihr erhält die Bildverarbeitung Vorschriften über die Topologie des neuronalen Netzes bzw. über die für dieses neuronale Netz zu verwendende Lernmechanismen. Das darin enthaltene spezifische Vorwissen aus der Aufgabenstellung, wie beispielsweise die Verteilung der Lernmuster oder die Vorgabe bekannter und veränderlicher Merkmale, wird dem Netz mit geeigneten Methoden mitgeteilt. Dieses Vorwissen geht ähnlich wie die Invarianzen nur in die Topologie ein. Die diesbezüglichen Vorschriften führen zu einer Auswahl bestimmter Synapsen, wobei diese einer Sonderbehandlung unterliegen, die die Veränderung der Synapse beim Lernvorgang beeinflußt oder einschränkt.

Für die Defektprüfung an bestimmten Bauteilen ist es sinnvoll, die Lernphase eines neuronalen Netzes so lange fortzusetzen, bis am Ausgang ein korrektes Ergebnis bezüglich der Klassierung vorliegt. Diese aufgabenspezifische Forderung besagt, daß sämtliche in der Erkennungsphase des neuronalen Netzes vorgegebenen Bilder exakt klassifiziert werden und nicht nur die beste Näherung zu einer gegebenen Eingabe ermittelt wird. Dies entspricht einer durch Training überwachten Lernphase.

Im folgenden wird anhand von drei schematischen Figuren ein Ausführungsbeispiel beschrieben.
- Die Figur 1: zeigt das Schema einer optoelektronischen Bildaufnahme mit anschließender neuronaler oder konventioneller Extraktion der Bildmerkmale und anschließender ebenfalls neuronaler oder konventioneller Klassierung.
- Die Figur 2: zeigt eine optoelektronische Bildaufnahme mit einer Bildvorverarbeitung, einer konventionellen Bildmerkmalsextraktion und einer neuronalen Klassierung.
- Die Figur 3: zeigt ein neuronales Netz zur dreidimensionalen Lötstelleninspektion, bestehend aus insgesamt vier Schichten.

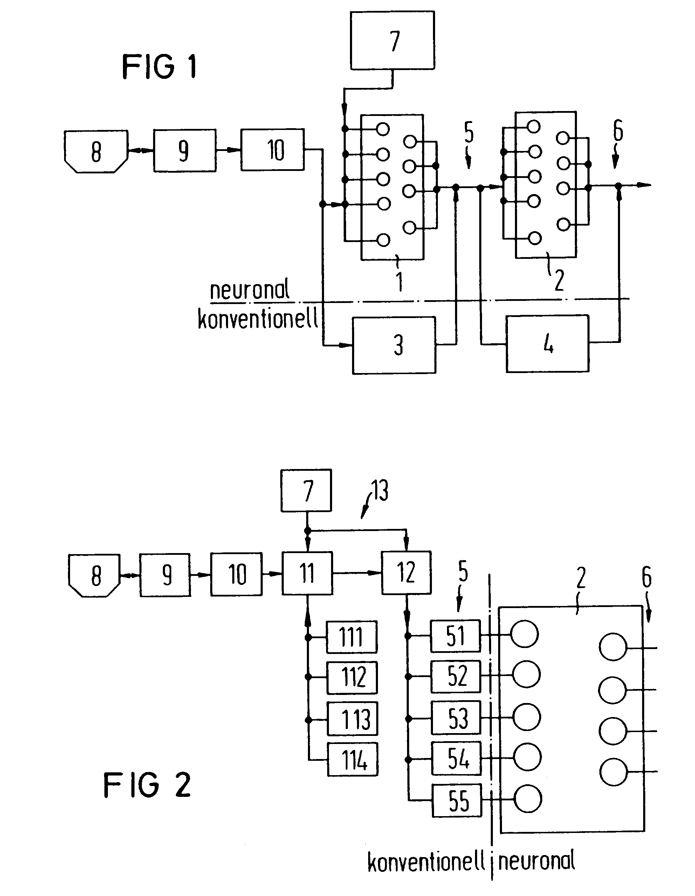

In der Figur 1 ist ein Schema eines visuellen Inspektionssystemes für zwei- oder dreidimensionale Bilder wiedergegeben, das aus einem Laser-Scanner 8 ein 3D/2D-Bild 10 ermittelt. Eine Scanner-Steuerung 9 sorgt für die zeilenweise Abtastung eines realen Musters. Das 2D/3D-Bild liegt in digitalisierter Form mit einer durch die Scanner-Steuerung der Aufgabenstellung angepaßten Auflösung und Bildpunktzahl vor. Die erste Stufe der Bilderkennung kann durch das neuronale Netz 1 oder durch die konventionelle Bildverarbeitung 3 geschehen. Die in Anschluß daran erhaltenen Bildmerkmale 5 werden an die zweite Stufe der Bilderkennung weitergegeben, die mittels eines neuronalen Netzes 2 oder mittels der konventionellen Klassierung 4, die meist auf statistischen Methoden beruht, eine Klassierung 6 des vom Laser-Scanner 8 aufgenommenen 3D/2D-Bildes 10 vornimmt. Die automatische Erfassung des 3D/2D-Bildes einer Szene geschieht mit dreidimensional aufnehmenden Sensoren, beispielsweise mittels der Triangolation. Für den Fall des Einsatzes von neuronalen Netzen 1, 2 werden geeignete Referenzbilder in der Lernphase des neuronalen Netzes angeboten, mittels der das Netz selbständig lernt. Diese Referenzmuster können sowohl reale Bilddaten, als auch ideale simulierte Daten sein. Vorschriften über die Auswahl dieser Referenzdaten und die Topologie des Netzes in der ersten Stufe der Bilderkennung, der Extraktion der Bildmerkmale, sind in einer Wissensbasis 7 hinterlegt, beispielsweise CAD/CAM-Daten. Dadurch wird eine direkte Kopplung der Bildverarbeitung an die Fertigung und die problemspezifische Aufgabenstellung erreicht.

Im Gegensatz zur herkömmlichen Bildverarbeitung, die für jede Aufgabenstellung speziell angepaßte Algorithmen zur Vorverarbeitung, Segmentierung und Merkmalsextraktion benötigt, besitzt die Bilderkennung mit neuronalen Netzen eine hohe Flexibilität. In ihr wird die Extraktion und Auswertung relevanter Bildmerkmale 5 selbständig und aufgabenspezifisch vorgenommen. Dabei kann eine der beiden obenbeschriebenen Stufen der Bilderkennung durch ein neuronales Netz besetzt sein und die andere Stufe konventionell arbeiten. Vorzugsweise werden jedoch sowohl die Extraktionen 12 der Bildmerkmale 5, als auch die Klassierung 6 mit Hilfe von neuronalen Netzen 1, 2 durchgeführt.

Eine besondere Bedeutung kommt der Lernphase zu, in der die Synapsen des Netzes mit geeigneten Referenzmustern trainiert werden. Dies geschieht in der Form, daß Lernmuster angeboten werden und die Synapsen des Netzes mit den vorgesehenen Lernmechanismen entsprechend verändert werden. Dabei sind aufgrund der Vorgabe der Wissensbasis 7 und der Invarianzen bestimmte Synapsen 19 nicht oder nur einheitlich veränderbar. Nach dem Anbieten des ersten Lernmusters ist am Ausgang der Bilderkennung eine allgemeine Aktivität vorhanden, aber keine exakte Klassierung. Die Lernmechanismen, die verschiedene Algorithmen sind, die vorschreiben, wie die Wichtungen der einzelnen Synapsen verändert werden, sorgen für die entsprechende Ausbildung der Synapsen, für die keine Einschränkungen aufgrund der Wissensbasis 7 besteht. In der Regel sollten alle später zu erkennenden Muster als Lernmuster in der Lernphase vorgegeben werden, damit in der Erkennungsphase eine problemlose Klassierung 6 durchführbar ist. Die Rückkopplung zwischen dem am Ausgang des neuronalen Netzes 2 anliegenden Signal zum neuronalen Netz 2 oder zu beiden neuronalen Netzen 1, 2 geschieht durch die Aussage, ob die vorgenommene Klassierung 6 richtig oder falsch ist. Als Folge davon werden bestimmte Synapsen belohnt, d. h. sie werden höher bewertet und andere Synapsen werden bestraft, d. h. sie werden geringer bewertet. Prinzipiell besteht die Möglichkeit auch die in den Neuronen enthaltenen Bewerter während der Lernphase über Lernmechanismen zu verändern. Hiermit könnte eventuell eine zeitliche Optimierung der Rechenvorgänge erreicht werden, da der Bewerter eines jeden Neurones die Summe aller Eingänge wichtet und über den Ausgang des Neurones entsprechend weitergibt.

Es ist zweckmäßig, dem neuronalen Netz 1, 2 während der Lernphase zunächst nur einfache Lernmuster vorzulegen, die eine schnelle Konvergenz des Lernverhaltens ermöglichen. In Anschluß daran werden komplexere Lernmuster angeboten, so daß das neuronale Netz 1, 2 auch für schwierigere Bilderkennungsaufgaben trainiert werden kann. Lernalgorithmen und -funktionen müssen adaptiv abhängig vom Lernzustand selbsttätig optimiert werden. Eine für die konventionelle Bildverarbeitung 3 notwendige Bildvorverarbeitung 11 kann im Falle des Einsatzes eines neuronalen Netzes 1 annähernd vollständig entfallen.

Um für Fertigungsprozesse vertretbare Bearbeitungszeiten für die Bilderkennungssysteme zu erreichen, müssen die neuronalen Netze durch Hardware realisiert werden. Hierzu sind VLSI-Bauteile (very large scale integration) und Neurochips verwendbar. Die Neuronen 19 eines neuronalen Netzes 1, 2 werden durch parallel arbeitende Prozessorelemente mit schnellen iterativen Verarbeitungsalgorithmen gebildet. Die Synapsen zwischen den einzelnen Neuronen werden durch schnell arbeitende RAM-Speicher verwirklicht.

Das in Figur 2 gezeigte Schema beinhaltet ebenfalls eine optoelektronische Bildaufnahme mittels eines Laser-Scanners 8 und einer Scanner-Steuerung 9 zur Erzeugung eines 3D/2D-Bildes 10. Die erste Stufe der Bilderkennung ist in diesem Fall eine konventionelle Bildverarbeitung 3, der eine Bildvorverarbeitung 11 vorgeschaltet ist. Diese Bildvorverarbeitung 11 beinhaltet im einzelnen eine Segmentierung 111, eine Medianfilterung 112, eine Glättung 113 und die Bildung von Histogrammen 114. Die Segmentierung 111 bezieht sich auf die Einteilung von Linien, Fenstern oder ähnliches. Die Medianfilterung 112 und die Glättung 113 bewirken insgesamt eine Verbesserung des Signal/Rausch-Verhaltens. Die Aufstellung von Histogrammen 114, in denen Häufigkeitsverteilungen von Höhen- oder Intensitätswerten eines Bildes aufgetragen sind, ist eine Möglichkeit, die Erkennungssicherheit einer konventionellen Bildverarbeitung 3 zu erhöhen.

Die Extraktion 12 der Bildmerkmale 5 wird anhand von vorgegebenen Rechenvorschriften durchgeführt. Dies kann nicht nur durch die über die Bildvorverarbeitung 11 bereits aufgearbeiteten Vorschriften der Wissensbasis 7, sondern direkt über Zusatzinformationen 13 in rationeller Weise geschehen. Als Bildmerkmale 5 kommen Mittelwerte 51, Extrema 52, Gradienten 53, Flächen 54 oder Volumen 55 in Frage. Die aufgenommenen Bilder der mit hoher Frequenz (MHz-Bereich) arbeitenden Bildaufnahme werden über ein Interface in einen RAM-Speicher eingelesen. Die Weiterverarbeitung erfolgt entsprechend Figur 2 konventionell bis hin zur Extraktion 12 der Bildmerkmale 5. Dabei liegen die Eingangsdaten bzw. die segmentierten Bildbereiche in Form von abgeleiteten spezifischen Bildmerkmalen 5 vor. Hieraus ist eine Bewertung des Bildinhaltes möglich. Diese Bewertung wird anschließend von einem neuronalen Netz 2 durchgeführt, wobei die Bildmerkmale 5 die Eingangsdaten dieses neuronalen Netzes 2 bilden. Dadurch ist eine optimale Trennbarkeit verschiedener Geometrien eines Bildes gegeben, wodurch die Bilderkennung unabhängig von der Verteilung der Merkmale im Merkmalsraum ist. Zugleich ergibt sich eine hohe Flexibilität des Systems, das weiterhin leicht an Änderungen der Eingangsmuster anpaßbar ist.

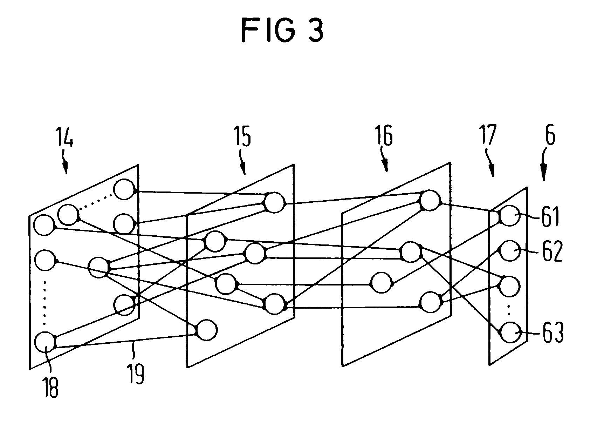

In der Figur 3 ist ein neuronales Netz zur dreidimensionalen Lötstelleninspektion schematisch dargestellt. Die Eingangsschicht 14 enthält genauso wie die verdeckten Schichten 15, 16 und die Ausgangsschicht 17 Neuronen 18. Die dazwischen liegenden Verbindungen sind die Synapsen 19. In dieser Bilderkennung wird eine höchstmögliche Flexibilität durch den Einsatz neuronaler Netze 1, 2 direkt hinter der Bildaufnahme erreicht. In der Figur 3 ist schematisch die Topologie eines derartigen Netzes für die Klassierung von Lötstellen wiedergegeben. Dabei aktivieren die digitalen Daten des 3D/2D-Bildes 10 (Wertebereich 0 - 256) direkt die Eingangsneuronen des neuronalen Netzes 1, 2 in der Eingangsschicht 14. Dazu ist natürlich die Konvertierung der digitalen Daten in die entsprechenden neuronalen Aktivitätsniveaus (0 - 1 oder -1 bis +1) notwendig. Die Aktivität der Ausgangsneuronen in der Ausgangsschicht 17 liefert nach der nötigen Lernphase eine direkte Interpretation bzw. Klassierung des Bildinhaltes. Aufgrund dieser Verfahrensweise kann eine aufgabenspezifische Bildvorverarbeitung 11 entfallen. Somit ist das gesamte System auf verschiedene Aufgabenstellungen leicht übertragbar. Die Topologie des benutzten neuronalen Netzes 1, 2 hängt von der Komplexität der Aufgabe ab. So ist beispielsweise für die Inspektion hochintegrierter Bauelemente die Verwendung eines relativ einfachen assoziativ arbeitenden neuronalen Netzes nach Hopfield ausreichend, während für komplexe Aufgabenstellungen wie für die Lötstellencharakterisierung neuronale Netze in Frage kommen, die mit Backpropagation oder Counterpropagation arbeiten. Die Methode der Backpropagation ist allgemeiner, während die Methode der Counterpropagation spezieller, aber dafür schneller in der Verarbeitung ist.

Der wesentliche Vorteil des Einsatzes von neuronalen Netzen 1, 2 ist die Tatsache, daß nicht für jede Aufgabenstellung speziell angepaßte Algorithmen notwendig sind. Der Einsatz neuronaler Netze in der Bilderkennung ist durch die Vorgabe von Invarianzen und in spezieller Form durch den Einsatz einer Wissensbasis 7 mit darin enthaltenen Vorschriften für die Extraktion 12 von Bildmerkmalen 5 praktikabel geworden. Zur Beschleunigung und Erhöhung der Zuverlässigkeit des Lernverhaltens neuronaler Netze kann über eine Fertigungsschnittstelle der Zugriff auf zusätzliche Informationen, beispielsweise CAD- oder CAM-Informationen, ermöglicht werden. Damit kann die Auswahl bestimmter Bildbereiche vorgenommen werden oder es kann für die jeweilige Aufgabenstellung spezielles vorhandenes Wissen eingebracht werden. Dieses eingebrachte Wissen kann beispielsweise darin bestehen, daß eine festgelegte Auswahl von zu prüfenden Lötstellen vorgegeben wird oder daß nur bestimmte Attribute von Lötstellen, wie Durchmesser oder Form, behandelt werden.

Für den speziellen Anwendungsfall der Bilderkennung werden Intensitäts- und Höhendaten ermittelt. Die bisher mit "Experten-Systemen" (Computer mit einem bestimmten Erfahrungsschatz) möglichen Bildverarbeitungen und Bilderkennungen werden von Bildauswertesystemen mit neuronalen Netzen bei weitem übertroffen. Die hohe Flexibilität dieser Systeme ermöglicht eine ständige Anpassung auf wechselnde Anforderungen. Hier ist insbesondere die Charakterisierung und Klassierung von Lötstellen auf elektronischen Baugruppen und die Inspektion und Qualitätskontrolle hochintegrierter Bauelemente (Mikropacks) zu nennen.

Die in Figur 3 vereinfacht dargestellte Lösung einer Bilderkennung, die in Form einer Klassierung 6 vorliegt, liefert an der Ausgangsschicht 17 verschiedene Klassen 61, 62, 63, in die geprüfte Muster oder Bauteile jeweils eingeordnet werden können. Dabei könnte beispielsweise die Klasse 61 für die Klassierung "gute Lötstelle" stehen und die anderen Klassen 62, 63 und alle dazwischenliegenden würden jeweils einem bestimmten Defekt der Lötstellen zugeordnet sein.

Der in Figur 3 angedeutete Aufbau des neuronalen Netzes läßt erkennen, daß hier zwei neuronale Netze aus jeweils zwei Schichten zu einem einzigen neuronalen Netz zusammengesetzt wurden. Somit sind nach außen hin lediglich die Eingangsschicht 14 und die Ausgangsschicht 17 sichtbar und die dazwischenliegenden Schichten 15, 16 sind versteckt. Die in Figur 3 dargestellte matrixartige Organisation der Neuronen 18 auf der Eingangsschicht 14 ist eine sinnvolle Lösung zur Einkopplung eines digital vorliegenden 3D/2D-Bildes 10. Dabei kann im Idealfall jedem Pixel ein Neuron 18 zugeordnet werden. Eine sequentielle, d. h. zeilenweise oder spaltenweise Abarbeitung der Bilddaten ist jedoch auch möglich.

## Patentansprüche

1. Verfahren zur visuellen Inspektion zwei- oder dreidimensionaler Bilder, insbesondere zur Defektprüfung an Werkstücken, wobei aus einem von einer optoelektronischen Bildaufnahme gelieferten Bild mittels einer Bildverarbeitung Bildmerkmale (5) exrahiert werden und anhand dieser Bildmerkmale (5) mittels einer Klassierung (6) eine Einteilung verschiedener Bilder in bestimmte Klassen (61, 62, 63) geschieht, **dadurch gekennzeichnet,** daß zur Extraktion (12) der Bildmerkmale (5) und/oder zur Klassierung (6) der Bilder ein neuronales Netz (1, 2) eingesetzt wird und, daß durch vorbestimmte Invarianzen bezüglich der Rotation, der Translation und der Skalierung ein Teil von Synapsen (19) des neuronalen Netzes (1, 2) einheitlich festgelegt wird.

2. Verfahren nach Anspruch 1, **dadurch gekennzeichnet,** daß sowohl für die Extraktion (12) der Bildmerkmale (5) als auch für die Klassierung (6) jeweils ein neuronales Netz (1, 2) eingesetzt wird.

3. Verfahren nach einem der vorhergehenden Ansprüche, **dadurch gekennzeichnet,** daß eine Wissensbasis (7) der Bildverarbeitung Vorschriften für die Topologie des neuronalen Netzes (1, 2) und der darin verwendeten Lernmechanismen liefert.

4. Verfahren nach Anspruch 3, **dadurch gekennzeichnet,** daß während der Lernphase entsprechend der in der Wissensbasis (7) enthaltenen Vorschriften die Topologie und die Lernmechanismen des zur Bildverarbeitung eingesetzten neuronalen Netzes (1, 2) angepaßt werden, wobei bestimmte Bereiche oder Synapsen (19) des neuronalen Netzes (1, 2) direkt selektiert werden.

5. Verfahren nach einem der vorhergehenden Ansprüche, **dadurch gekennzeichnet,** daß während der Lernphase eines neuronalen Netzes (1, 2) solange Lernmuster über die Bildaufnahme eingegeben werden, bis ein korrektes Ergebnis am Ausgang der Klassierung (6) vorliegt.

## Claims

1. Method for the visual inspection of two- or three-dimensional images, in particular for defect checking on workpieces, image features (5) being extracted by means of image processing from an image supplied by an optoelectronic image recording means, and a subdivision of various images into specific classes (61, 62, 63) taking place by means of a classification (6) using these image features (5), characterized in that a neural network (1, 2) is used for the extraction (12) of the image features (5) and/or for the classification (6) of the images, and in that some of the synapses (19) of the neural network (1, 2) are fixed uniformly as a result of predetermined invariants with respect to rotation, translation and scaling.

2. Method according to Claim 1, characterized in that a neural network (1, 2) is used in each case both for the extraction (12) of the image features (5) and for the classification (6).

3. Method according to one of the preceding claims, characterized in that a knowledge base (7) supplies to the image processing rules for the topology of the neural network (1, 2) and the learning mechanisms used therein.

4. Method according to Claim 3, characterized in that, during the learning phase, in accordance with the laws contained in the knowledge base (7), the topology and the learning mechanisms of the neural network (1, 2) which is used for the image processing are adapted, specific regions or synapses (19) of the neural network (1, 2) being directly selected.

5. Method according to one of the preceding claims, characterized in that, during the learning phase of a neural network (1, 2), learning patterns are input via the image recording means until a correct result is present at the output of the classification (6).

## Revendications

1. Procédé d'inspection visuelle d'images à deux ou à trois dimensions, notamment pour détecter un défaut de pièces à usiner, dans lequel on extrait d'une image fournie par un enregistrement opto-électronique d'image des caractéristiques (5) de l'image par traitement d'image et dans lequel on effectue, sur la base de ces caractéristiques (5) d'image, un classement (6) de diverses images en classes déterminées (61, 62, 63), caractérisé en ce que l'on utilise, pour extraire (12) les caractéristiques (5) d'image et/ou pour classer (6) les images un réseau (1, 2) neuronal et on fixe de manière unitaire par des invariants prédéterminés en rotation, en translation et en échelle une partie des synapses (19) du réseau (1, 2) neuronal.

2. Procédé suivant la revendication 1, caractérisé en ce que l'on utilise à la fois pour l'extraction (12) des caractéristiques (5) d'image et pour le classement (6) un réseau neuronal (1, 2).

3. Procédé suivant l'une des revendications précédentes, caractérisé en ce qu'une base (7) de connaissances du traitement d'image donne des règles pour la topologie du réseau neuronal (1, 2) et des mécanismes d'apprentissage qui y sont utilisés.

4. Procédé suivant la revendication 3, caractérisé en ce que l'on adapte, pendant la phase d'apprentissage, suivant les règles contenues dans la base (7) de connaissances, la topologie et les mécanismes d'apprentissage du réseau (1, 2) neuronal utilisé pour le traitement d'image, on sélectionne directement des domaines déterminés ou synapses (19) du réseau neuronal (1, 2).

5. Procédé suivant l'une des revendications précédentes, caractérisé en ce que l'on introduit pendant la phase d'apprentissage d'un réseau neuronal (1, 2), des modèles d'apprentissage concernant l'enregistrement d'image, jusqu'à ce qu'un résultat correct soit présent à la sortie du classement (6).
